(19) Europäisches Patentamt
European Patent Office
Office européen des brevets

(11) **EP 4 148 678 A1**

(12) **EUROPEAN PATENT APPLICATION**

(43) Date of publication:
**15.03.2023 Bulletin 2023/11**

(21) Application number: **22158686.0**

(22) Date of filing: **25.02.2022**

(51) International Patent Classification (IPC):
**G06T 11/00** (2006.01)     **G06K 9/00** (2006.01)
**G06T 11/60** (2006.01)

(52) Cooperative Patent Classification (CPC):
**G06T 11/001; G06F 40/109; G06F 40/30;
G06T 11/60; G06V 10/806; G06V 10/82;
G06V 30/19073; G06V 30/28**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.09.2021 CN 202111057826**

(71) Applicant: **Beijing Baidu Netcom
Science and Technology Co., Ltd.
Beijing 100085 (CN)**

(72) Inventors:
• **TANG, Licheng
BEIJING, 100085 (CN)**
• **LIU, Jiaming
BEIJING, 100085 (CN)**

(74) Representative: **Regimbeau
20, rue de Chazelles
75847 Paris Cedex 17 (FR)**

(54) **TRAINING METHOD FOR CHARACTER GENERATION MODEL, CHARACTER GENERATION METHOD, APPARATUS AND DEVICE**

(57)     Provided is a training method for a character generation model, a character generation method, apparatus and device, which relate to the technical field of artificial intelligences, particularly, the technical field of computer vision and deep learning. The specific implementation scheme includes: a first training sample is acquired, a target model is trained based on the first training sample, and a first character confrontation loss is acquired; a second training sample is acquired, the target model is trained based on the second training sample, and a second character confrontation loss, a component classification loss and a style confrontation loss are acquired; and a parameter of the character generation model is adjusted according to the first character confrontation loss, the second character confrontation loss, the component classification loss and the style confrontation loss. The accuracy of fonts generated by the character generation model may be improved in the embodiments of the present disclosure.

**EP 4 148 678 A1**

Acquire a first training sample, train a target model based on the first training sample, and acquire a first character confrontation loss — S101

Acquire a second training sample, train the target model based on the second training sample, and acquire a second character confrontation loss, a component classification loss and a style confrontation loss — S102

Adjust a parameter of the character generation model according to the first character confrontation loss, the second character confrontation loss, the component classification loss and the style confrontation loss — S103

**FIG. 1**

**Description**

**TECHNICAL FIELD**

The present disclosure relates to the technical field of artificial intelligences, particularly, the technical field of computer vision and deep learning, for example, a training method for a character generation model, and a character generation method, apparatus and device.

**BACKGROUND**

The image processing is a practical technology with huge social and economic benefits, and is widely applied to all walks of life and daily life of people.

The style migration of an image means that a style is migrated from an image to another image to synthesize a new artistic image.

**SUMMARY**

The present disclosure provides a training method for a character generation model, a character generation method, apparatus and device, and a medium.

According to an aspect of the present disclosure, a training method for a character generation model is provided. The method includes: a first training sample is acquired, a target model is trained based on the first training sample, and a first character confrontation loss is acquired, where the first training sample includes a first source domain sample word, a first target domain sample word and a style noise word, a style type of the style noise word is the same as a style type of the first target domain sample word, the target model includes a character generation model, a component classification model and a discrimination model; a second training sample is acquired, the target model is trained based on the second training sample, and a second character confrontation loss, a component classification loss and a style confrontation loss are acquired, where the second training sample includes a second source domain sample word, a second target domain sample word and a style standard word, a style type of the style standard word is the same as a style type of the target domain sample word; and a parameter of the character generation model is adjusted according to the first character confrontation loss, the second character confrontation loss, the component classification loss and the style confrontation loss.

According to another aspect of the present disclosure, a character generation method is provided. The method includes: a source domain input word and a target domain input word corresponding to the source domain input word are acquired; and the source domain input word and the target domain input word are input into a character generation model to obtain a target domain new word; where the character generation model is obtained by training according to the method of any one of the embodiments of the present disclosure.

According to another aspect of the present disclosure, a training apparatus for a character generation model is provided. The apparatus includes a first training sample training module, a second training sample training module and a first loss adjustment module. The first training sample training module is configured to acquire a first training sample, train a target model based on the first training sample, and acquire a first character confrontation loss, where the first training sample includes a first source domain sample word, a first target domain sample word and a style noise word, a style type of the style noise word is the same as a style type of the first target domain sample word, the target model includes a character generation model, a component classification model and a discrimination model. The second training sample training module is configured to acquire a second training sample, train the target model based on the second training sample, and acquire a second character confrontation loss, a component classification loss and a style confrontation loss, where the second training sample includes a second source domain sample word, a second target domain sample word and a style standard word, a style type of the style standard word is the same as a style type of the second target domain sample word. The first loss adjustment module is configured to adjust a parameter of the character generation model according to the first character confrontation loss, the second character confrontation loss, the component classification loss and the style confrontation loss.

According to another aspect of the present disclosure, a character generation apparatus is provided. The apparatus includes an input word acquisition module and a character generation module. The input word acquisition module is configured to acquire a source domain input word and a target domain input word corresponding to the source domain input word. The character generation module is configured to input the source domain input word and the target domain input word into a character generation model to obtain a target domain new word; where the character generation model is obtained according to the training method for the character generation model of any one of the embodiments of the present disclosure.

According to another aspect of the present disclosure, an electronic device is provided. The electronic device includes at least one processor and a memory communicatively connected to the at least one processor. The memory stores an instruction executable by the at least one processor, and when the instruction is executed by the at least one processor, the at least one processor is caused to perform the training method for the character generation model described in any one of the embodiments of the present disclosure or the character generation method described in any one of the embodiments of the present disclosure.

According to another aspect of the present disclosure, a non-transitory computer-readable storage medium storing a computer instruction is provided. The computer instruction is configured to cause a computer to perform the training method for the character generation model described in any one of the embodiments of the present disclosure or the character generation method described in any one of the embodiments of the present disclosure.

According to another aspect of the present disclosure, a computer program is provided. The computer program includes a computer program, where the computer program, when executed by a processor, implements the training method for the character generation model described in any one of the embodiments of the present disclosure or performs the character generation method described in any one of the embodiments of the present disclosure.

The accuracy of fonts generated by the character generation model may be improved in the embodiments of the present disclosure.

It should be understood that the contents described in this section are not intended to identify key or critical features of the embodiments of the present disclosure, nor intended to limit the scope of the present disclosure. Other features of the present disclosure will be readily understood from the following description.

BRIEF DESCRIPTION OF DRAWINGS

The drawings are intended to provide a better understanding of this scheme and are not to be construed as limiting the present disclosure, in which:

FIG. 1 is a schematic diagram of a training method for a character generation model according to an embodiment of the present disclosure;

FIG. 2 is a training scene diagram of a first training sample according to an embodiment of the present disclosure;

FIG. 3 is a training scene diagram of a second training sample according to an embodiment of the present disclosure;

FIG. 4 is a schematic diagram of a training method for a character generation model according to an embodiment of the present disclosure;

FIG. 5 is a schematic diagram of an embodiment in which a method for calculating an occurrence probability of an effective pixel is provided according to an embodiment of the present disclosure;

FIG. 6 is a schematic diagram of a training method for a character generation model according to an embodiment of the present disclosure;

FIG. 7 is a training scene diagram of a character generation model being constrained by using a wrong word loss according to an embodiment of the present disclosure;

FIG. 8 is an effect diagram of a generation word of a character generation model according to an embodiment of the present disclosure;

FIG. 9 is a schematic diagram of a character generation method according to an embodiment of the present disclosure;

FIG. 10 is a schematic diagram of a training apparatus for a character generation model according to an embodiment of the present disclosure;

FIG. 11 is a schematic diagram of a character generation apparatus according to an embodiment of the present disclosure;

FIG. 12 is a block diagram of an electronic device for implementing a training method for a character generation model or a character generation method of an embodiment of the present disclosure.

**DETAILED DESCRIPTION**

Exemplary embodiments of the present disclosure are described below with reference to the accompanying drawings, in which various details of embodiments of the present disclosure are included to assist understanding, and which are to be considered as merely exemplary. Therefore, those of ordinary skill in the art will recognize that various changes and modifications of the embodiments described herein may be made without departing from the scope and spirit of the present disclosure. Also, descriptions of well-known functions and structures are omitted in the following description for clarity and conciseness.

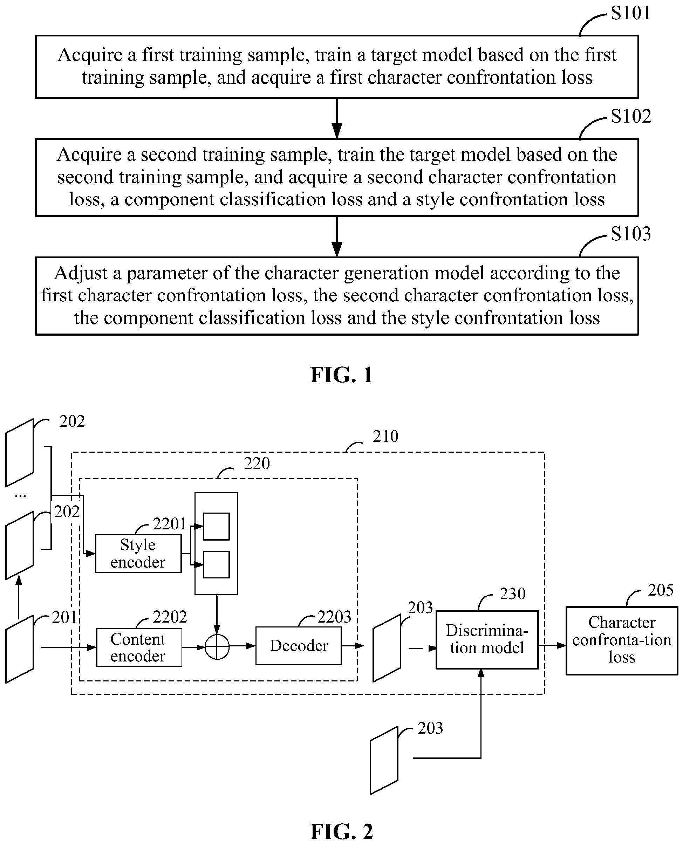

FIG. 1 is a flowchart of a training method for a character generation model according to an embodiment of the present disclosure, this embodiment may be applicable to train a character generation model, and the character generation model is configured to convert a source domain style character into a target domain style character. The method of this embodiment may be executed by a training apparatus for a character generation module, the apparatus may be implemented in software and/or hardware and may be configured in an electronic device with certain data calculating capabilities, the electronic device may be a client device or a server device, and the client device is such as a mobile phone, a tablet computer, an on-board terminal, a desktop computer.

In S101, a first training sample is acquired, a target model is trained based on the first training sample, and a first character confrontation loss is acquired, where the first training sample includes a first source domain sample word, a first target domain sample word and a style noise word, a style type of the style noise word is the same as a style type of the first target domain sample word, the target model includes a character generation model, a component classification model and a discrimination model.

The source domain sample word may refer to an image with a source domain font style, the source domain font style may refer to a regular font of characters, may also refer to a printed font, such as a regular script font, a song script font, or a black script font in Chinese characters, and a Times New Roman font or Calibri font in Western characters, the character may further include a numeric character. The Western character may include characters such as English, German, Russian, or Italian, and are not particularly limited thereto. The style noise word may refer to an image having the same partial image content as the source domain sample word, and the image is further added with noise information. The target domain generation word may refer to an image with a target domain font style. The target domain font style may be a user handwritten font style of characters or other artistic font style. It should be noted that the words in the embodiments of the present disclosure actually refer to the characters. The source domain sample word and the target domain generation word have the same image content and different styles and types. The style noise word and the source domain sample word have the same partial image content and different styles and types, and the style noise word and the target domain generation word have the same partial image content. The characters may be composed of at least one component, and having the same partial image content may mean having the same component, and in fact, the style noise word, the source domain sample word, and the target domain generation word have the same at least one component. The component may be a radical of a Chinese character, and may also be a word root of an English character and the like. For example, "你" may consist of a component "亻" and a component "尔"; "做" may consist of a component "亻" and a conponent "故", or may consist of a component "亻", a component "古" and a component "攵"; and "衣" may consist of a component "衣".

At least one component included in the source domain sample word may be determined according to the source domain sample word, and a word including the at least one component is queried in a set of pre-acquired noise words according to each component, and the word including the at least one component is determined as the style noise word.

In one specific example, the source domain sample word is an image generated by the regular script "你", and the target domain generation word is an image generated by the model generated handwritten word "你", "你" may be split into a component "亻" and a component "尔". The style noise word is a word that is a handwritten word "称" written by hand actually and is added with an image generated by the noise, and a word that is a handwritten word "佳" written by hand actually and is added with an image generated by the noise. Where "称" includes a component "尔", which is the same as the "尔" component in "你"; and the "佳" includes a component "亻", which is the same as the "亻" component in "你".

The first training sample includes a first source domain sample word, a style noise word and a target domain sample word, the first training sample includes words with added noise information as input to the model, the first training sample is used for training the model, so that the ability of the model for style conversion of unknown fonts (not belonging to a training data set) may be increased, accurate style conversion words are generated for unknown fonts, and the generalization ability of the model is improved.

The target models include a character generation model, a component classification model, and a discrimination model. The target model is configured to train the character generation model, the discrimination model and the component classification model. It should be noted that the discrimination model and the component classification model may be jointly trained with the character generation model, and during a later application, the style migration of the image may be achieved only by using the trained character generation model. The character generation model is configured to convert the source domain sample word into the target domain generation word.

The style migration model includes a style encoder, a content encoder, and a decoder. The style encoder is configured to encode the style noise word, the content encoder is configured to encode the first source domain sample word, two encoded results are fused and the fused result is input into the decoder to obtain a first target domain generation word, and the style noise word is determined according to the first source domain sample word. For example, an image containing the regular script word "你" is input into the style migration model, and the style migration model can output an image containing the handwritten word "你".

Multiple noise style feature vectors are fused to obtain a first fusion style feature vector, and for the first fusion style feature vector, values of vector elements at each position are summed and averaged to obtain the values of the vector elements at the position, and a first fusion style feature vector is determined according to the values of the vector elements at all positions. That the fusion style feature vector and the first content feature vector are fused to obtain the first target fusion feature vector may include: for the first fusion style feature vector, the value of the vector element of each position with a value of a vector element of the first content feature vector at a corresponding position is summed to obtain a value of the vector element at the position, and the first target fusion feature vector is determined according to the values of the vector elements at all positions.

Moreover, the target model further includes a discrimination model. The discrimination model is configured to detect whether the target domain sample word and the target domain generation word are real handwritten words or not and classify character types. The first target domain sample word and the first target domain generation word are input into the discrimination model, and the first character confrontation loss is calculated. The character confrontation loss is used for performing a character classification on words and judging whether the words are the real handwritten words or not, the character confrontation loss refers to a difference between the character classification of a word and a correct character type of that word, and a difference between the word and the true handwritten word. It should be noted that, in practice, the target model further includes the component classification model, but for the first training sample, the component classification model does not need to calculate the component classification loss.

In S102, a second training sample is acquired, the target model is trained based on the second training sample, and a second character confrontation loss, a component classification loss and a style confrontation loss are acquired, where the second training sample includes a second source domain sample word, a second target domain sample word and a style standard word, a style type of the style standard word is the same as a style type of the target domain sample word.

The style standard word may refer to an image having a target domain font style, and the image has no noise information added thereto. The style standard word and the source domain sample word have the same partial image content and are different in a style type, and the style standard word and the target domain generation word have the same partial image content and are the same in style type. The style standard word, the source domain sample word, and the target domain generation word have at least one same component. Compared with the style noise word, the style standard word has no noise. Alternatively, the style noise word may be a word formed by adding noise on the basis of the style standard word.

At least one component included in the source domain sample word may be determined according to the source domain sample word, and according to each component, a word including the at least one component is queried in a set of pre-acquired standard words with the target domain font style, and this word is determined as the style standard word. The noise information may be added according to the standard word to generate the noise word.

The second training sample includes a second source domain sample word, a style standard word and a target domain sample word, the second training sample includes a word not added with noise information as the input of the model, and the second training sample is used for training the model, so that the ability of the model to accurately realize the style conversion can be improved, and the style conversion accuracy of the model can be improved.

The target model includes character generation models, a component classification model, and a discrimination model. The second source domain sample word is sent to a content encoder to obtain a second content feature vector, and the style standard word is sent to a style encoder to obtain a standard style feature vector. Multiple target domain style words are provided, multiple standard style feature vectors are provided correspondingly, the multiple standard style feature vectors are fused to obtain a second fusion style feature vector, the second fusion style feature vector and the second content feature vector are fused to obtain a second target feature vector, and the second target feature vector is sent to a decoder for decoding to obtain a second target domain generation word.

Multiple standard style feature vectors are fused to obtain a second fusion style feature vector in a manner that for the standard style feature vector, values of vector elements at each position are summed and averaged to obtain the values of the vector elements at the position, and a second fusion style feature vector is determined according to the values of the vector elements at all positions. That the second fusion style feature vector and the second content feature vector are fused to obtain the second target fusion feature vector may include: for the second fusion style feature vector, the value of the vector element of each position with a value of a vector element of the second content feature vector at a corresponding position is summed to obtain a value of the vector element at the position, and the second target fusion feature vector is determined according to the values of the vector elements at all positions.

The component classification model is configured to detect whether components which are the same as components included in the source domain sample word exist in components included in words corresponding to the style feature vector or not, that is, the component classification model is configured to detect whether radicals which are the same as radicals of the source domain sample word exist in the words corresponding to the style feature vector or not. The second target domain generation word is input into the character generation model in the manner that the second target domain generation word is input into the style encoder to obtain a generation style feature vector of the second target domain generation word. The generation style feature vector and the standard style feature vector are input into the component classification model to calculate the component classification loss. The component classification loss is used for constraining the accuracy of the component included in the target domain generation word output by the character generation model, and may be used for judging whether the component included in the word is correct or not. In practice, the component classification loss refers to a difference between an included component identified by the word and a correct component included by the word.

Moreover, the discrimination model is further configured to detect whether the target domain sample word and the target domain generation word are real handwritten words, and to classify style types. The second target domain sample word and the second target domain generation word are input into the discrimination model, and the style confrontation loss is calculated. The style confrontation loss is used for performing a style classification on words, and judging whether the words are the real handwritten words. The style confrontation loss refers to a difference between the style type of a word and a correct style type of that word, and a difference between the word and the true handwritten word. Based on the above description, the second target domain sample word and the second target domain generation word are input into the discrimination model, and the second character confrontation loss is calculated.

In S103, a parameter of the character generation model is adjusted according to the first character confrontation loss, the second character confrontation loss, the component classification loss and the style confrontation loss.

The parameter of the character generation model is adjusted according to the first character confrontation loss, the second character confrontation loss, the component classification loss and the style confrontation loss to obtain an updated character generation model. For a next source domain sample word, a corresponding style standard word and style noise word are determined, the updated character generation model is used, the operation S101 is returned, and a training is performed repeatedly until a preset training stop condition is reached, the parameter of the character generation model is stopped being adjusted, and the trained character generation model is obtained. The training stop condition may include that the sum of the losses is converged, all losses are converged, or the number of iterations is larger than or equal to a set number threshold value.

Due to a fact that styles of the hand-written words in the real world are very different, all situations in reality cannot be covered in a training set. Due to the small coverage of the training sample, the model trained according to the method has poor capability of converting the style of the unknown font.

According to the technical scheme of the present disclosure, the character generation model in the target model is trained based on the first training sample including the style noise word and the second training sample including the style standard word, the noise is added on the basis of the words, a training sample including noise information is determined to train the character generation model, so that the capability of the character generation model for converting the style of the unknown font may be increased, the generalization capability of the model is improved, and moreover, a training sample not including the noise information is combined to train the character generation model, so that the capability of the model for accurately realizing the style conversion can be improved, and thus the accuracy of the style conversion of the model can be improved.

FIG. 2 is a training scene diagram of a first training sample according to an embodiment of the present disclosure. As shown in FIG. 2, the character generation model 220 includes a style encoder 2201, a content encoder 2202, and a decoder 2203. A source domain sample word 201 is sent to a content encoder 2102 to obtain a first content feature vector, and a style noise word 202 is sent to a style encoder 2101 to obtain a noise style feature vector. Multiple style noise words 202 are provided, and correspondingly, multiple noise style feature vectors are provided. The multiple noise style feature vectors are fused to obtain a first fusion style feature vector, the first fusion style feature vector and the first content feature vector are fused to obtain a first target feature vector, and the first target feature vector is sent to a decoder 2103 for decoding so as to obtain a first target domain generation word 203. The target model 210 further includes a discrimination model 230. The discrimination model is configured to detect whether the target domain sample word and the target domain generation word are real handwritten words or not and classify character types. The first target domain sample word 204 and the first target domain generation word 203 are input into the discrimination model 230 to calculate a first character confrontation loss 205. It should be noted that in practice the target model 210 further includes a component classification model, but for the first training sample, there is no need for the component classification model to calculate a component classification loss, and thus is not shown in FIG. 2.

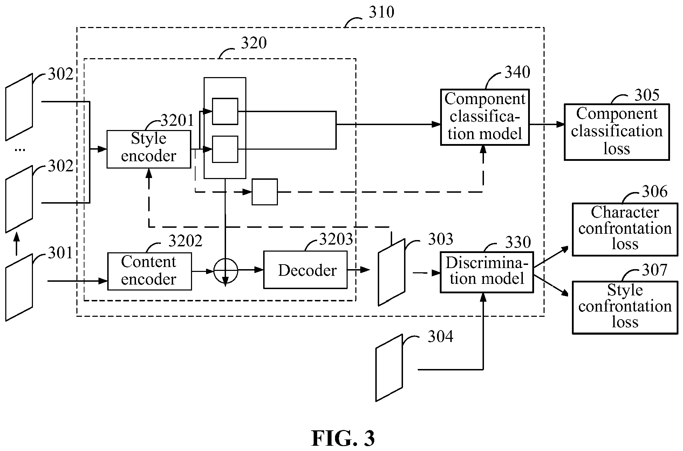

FIG. 3 is a training scene diagram of a second training sample according to an embodiment of the present disclosure, as shown in FIG. 3, the target model 310 includes a character generation model 320, a component classification model 340, and a discrimination model 330. The second source domain sample word 301 is sent to a content encoder 3202 to obtain a second content feature vector, and the style standard word 302 is sent to a style encoder 3201 to obtain a standard style feature vector. Multiple target domain style words are provided, and correspondingly, multiple standard style feature vectors are provided. The multiple standard style feature vectors are fused to obtain a second fusion style feature vector, the second fusion style feature vector and the second content feature vector are fused to obtain a second target feature vector, and the second target feature vector is sent to a decoder 3203 for decoding so as to obtain a second target domain generation word 303. The second target domain generation word 303 is input into the character generation model 320, for example, the second target domain generation word 303 is input into the style encoder 3201 to obtain a generation style feature vector of the second target domain generation word 303. The generation style feature vector and the standard style feature vector are input into the component classification model 340 to calculate the component classification loss 305. The second target domain sample word 304 and the second target domain generation word 303 are input into the discrimination model 330 to calculate a style confrontation loss 307. Based on the foregoing description, the second target domain sample word 304 and the second target domain generation word 303 are input into the discrimination model 330 so as to calculate a second character confrontation loss 306.

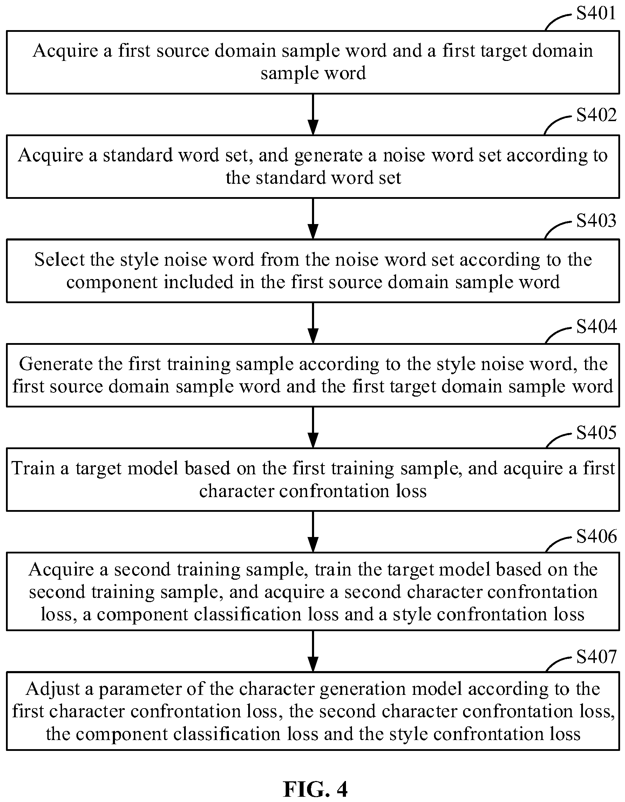

FIG. 4 is a flowchart of another training method for a character generation model according to an embodiment of the present disclosure, which is further optimized and expanded based on the above technical schemes, and may be combined with the above optional implementations. That the first training sample is acquired may include: the first source domain sample word and the first target domain sample word are acquired; a standard word corresponding to the style type is selected from a pre-acquired standard word set according to a style type of the first target domain sample word, and the standard word is determined as a style standard word; and a noise word set is generated according to the standard word set, a noise word corresponding to the style type are selected from the noise word set, and the noise word is determined as a style noise word.

In S401, a first source domain sample word and a first target domain sample word are acquired.

Optionally, the source domain sample word is an image with a source domain font style, and the target domain sample word is an image with a target domain font style.

The source domain sample word is an image generated by words with the source domain font style. The target domain sample word is an image generated by words with the target domain font style. The source domain font style is different from the target domain font style. Exemplarily, the source domain font style is a printed font, for example, for the Chinese character font, the source domain font style is a song script font, a regular script font, a black script font, or a clerical script font; the target domain font style is an artistic font style such as a real handwritten font style of the user.

The source domain sample word is configured as the image with the source domain font style, and the target domain sample word is configured as the image with the target domain font style, conversion of different font styles may be realized, and the number of fonts with new styles is increased.

In S402, a standard word set is acquired, and a noise word set is generated according to the standard word set.

The font style of the standard word included in the standard word set is the target domain font styles, and the target domain font style of the standard word include a font style of the first target domain sample word and a font style of the second target domain sample word. The standard word set is a set formed by images formed by words with the target domain font style which are acquired in advance and cover the full assembly. An image formed by words of a target domain font style may be acquired in advance, and a standard character set is formed. Exemplarily, the target domain font style is a user handwritten font style, which may be further subdivided, such as, handwritten regular script, handwritten affiliated script, and handwritten cursive script. Images of words of a handwritten font style provided by user authorization may be acquired in advance, and a standard word set is generated. For example, for Chinese characters and each font style, 100 words overlaid with full radicals may be pre-configured, and the user may be prompted to authorize the provision of the words with the handwritten font style to generate the standard word set for the 100 words overlaid with full radicals. Exemplarily, the target domain font style includes a handwritten affiliate font style and a handwritten cursive font style, and correspondingly, the standard word set includes 100 standard words with the handwritten affiliate font style and 100 standard words with the handwritten cursive font style.

The noise word may be a word formed by introducing noise information on the basis of standard words. One standard word may correspondingly generate at least one noise word according to different introduced noise information. Noise may be introduced from each standard word included in the standard word set so as to form at least one noise word, and thus the noise word set is formed.

Optionally, that the noise word set is generated according to the standard word set includes: in the standard word set, alternative standard words with different styles and types and a same content are acquired; effective pixel distribution information of the alternative standard words is determined according to the acquired alternative standard words; and alternative noise words of the alternative standard words are generated according to the effective pixel distribution information, and the alternative noise words are added into the noise word set.

There are typically no duplicate standard words in the standard word set. Any two standard characters are different in style type or content. Different content is meant that the character content is different, for example, a content of the standard word "做" and a content of the standard word "神" are different. The alternative standard words refer to standard words with different styles and types and the same content.

In the embodiments of the present disclosure, the word actually refers to the image generated by the word, and the effective pixel refers to a pixel composing the character in the image generated by the word; correspondingly, an ineffective pixel exists in the image, and the ineffective pixel may refer to a background pixel which does not constitute characters in the image. For example, in an image of a word that is a black-on-white word, the effective pixel is a black pixel; the ineffective pixel is a white pixel. Image sizes of the standard words and the alternative standard words are the same. The effective pixel distribution information is used for introducing noise information, and may be used for determining a target pixel position of the effective pixel, so that positions where the effective pixels are added and/or positions where the effective pixels are deleted are determined on the basis of alternative standard words according to the target pixel position, or in all images formed by the ineffective pixels, the effective pixels from nothing to nothing are added at the target pixel position so as to generate the alternative noise words. Adding effective pixels may refer to changing ineffective pixels into effective pixels, such as, changing white pixels into black pixels in an image of a word in black on white; deleting effective pixels may refer to changing effective pixels into ineffective pixels, such as, changing black pixels into white pixels in an image of a word in black on white. The effective pixel distribution information may refer to statistical distribution data of effective pixels in an image generated by words, and the statistical distribution data may be a position statistical result of the effective pixel. The effective pixel distribution information of the alternative standard words may be determined according to the positions of effective pixels in multiple alternative standard words with different styles and types and the same content.

The alternative noise word of the alternative standard word being generated according to the effective pixel distribution information may includes that a target pixel position where the effective pixel should exist is determined according to the effective pixel distribution information on the basis of the alternative standard word, and the effective pixel is correspondingly added and/or deleted to generate the alternative noise word. For example, target pixel positions of added and/or deleted effective pixels are determined according to effective pixel distribution information includes the number of times that the effective pixels appear at each position is calculated according to statistical distribution data of the effective pixels in an image generated by a word, and the target pixel positions where the effective pixels should exist are determined according to the number of times.

In practice, alternative noise words of alternative standard words are generated according to the effective pixel distribution information in the manner that noise may be introduced based on a posture of the font so as to preserve the posture of the font, so that the style noise word has the same font content features as at least one component of the source domain sample word, and a model training is performed based on the style noise word, and the model may still learn the fonts while learning unknown fonts.

The effective pixel distribution information is determined according to alternative standard words with different styles and types and the same content, noise information is introduced according to the effective pixel distribution information, alternative noise words are determined, font content features of the alternative standard words may be reserved and serve as training samples to train the character generation model, and the character generation model may still learn the fonts while learning unknown fonts, and thus the generalization ability and style migration accuracy of the model are improved simultaneously.

Optionally, that the effective pixel distribution information of the alternative standard words is determined according to the acquired alternative standard words includes: the number of the acquired alternative standard words is counted; effective times of effective pixels appearing at pixel positions are calculated in the acquired alternative standard words; an occurrence probability of the effective pixels at the pixel positions is calculated according to the effective times and the number of the words; and the occurrence probability of the effective pixels at different pixel positions in the acquired alternative standard words is determined as the effective pixel distribution information of the alternative standard words.

The number of words refer to, in the standard word set, the number of alternative standard words with different styles and types and the same content. The image is composed of pixels, and the positions of the pixels in the image are the pixel positions of the pixels. The effective times of the pixel positions refer to the number of effective pixels appearing at corresponding pixel positions in all alternative standard words. The effective pixel occurrence probability is used for determining the probability of whether the pixel at the pixel position is the effective pixel or not. A quotient of the effective times divided by the number of words may be determined as the probability of occurrence of effective pixels. An occurrence probability of one effective pixel may be calculated for each pixel position in the image.

That an alternative noise word is generated according to the occurrence probability of the effective pixel may include: throughout each pixel position in the image, and whether the pixel at the pixel position is the effective pixel is judged according to the occurrence probability of the effective pixel corresponding to the pixel position; and in a case where the pixel at the pixel position is determined to be the effective pixel, the pixel at the pixel position is determined as the effective pixel, and the next pixel position is continued to processed until the traversal of all pixel positions is completed to obtain the alternative noise word.

The number of alternative standard words with different styles and types and the same content is counted and the effective times of effective pixels appearing at pixel positions in each alternative standard word is counted, the occurrence probability of the effective pixels is calculated to serve as the effective pixel distribution information, noise is introduced, so that font content features of the effective pixels can be accurately reserved, and the style migration accuracy of the character generation model can be improved. Moreover, the introduced noise information may be flexibly adjusted, the coverage range of style noise words is increased, and thus the generalization ability of the model is improved.

In S403, the style noise word is selected from the noise word set according to the component included in the first source domain sample word and the font style of the first target domain sample word.

A component splitting is performed on the first source domain sample word, at least one component that constitutes the first source domain sample word is determined. The font style of the first target domain sample word is acquired. At least one component including the first source domain sample word is queried in the noise word set, and a word with the same font style as that of the first target domain sample word is determined as the style noise word.

In S404, the first training sample is generated according to the style noise word, the first source domain sample word and the first target domain sample word.

In S405, a target model is trained based on the first training sample, and a first character confrontation loss is acquired, where the first training sample includes a first source domain sample word, a first target domain sample word and a style noise word, a style type of the style noise word is the same as a style type of the first target domain sample word, the target model includes a character generation model, a component classification model and a discrimination model.

In S406, a second training sample is acquired, the target model is trained based on the second training sample, and a second character confrontation loss, a component classification loss and a style confrontation loss are acquired, where the second training sample includes a second source domain sample word, a second target domain sample word and a style standard word, a style type of the style standard word is the same as a style type of the target domain sample word.

A component splitting is performed on the second source domain sample word, at least one component that constitutes the second source domain sample word is determined. The font style of the second target domain sample word is acquired. At least one component including the second source domain sample word may be queried from the above-described standard word set, a word with the same font style as that of the second target domain sample word is determined as the style noise word, and the second source domain sample word and the second target domain sample word are combined to form the second training sample.

Optionally, the first training sample includes multiple groups of first training samples, the second training sample includes multiple groups of second training samples, and that the target model is trained based on the first training sample includes: a first-round training is performed on the target model based on the multiple groups of first training samples. That the target model is trained based on the second training sample includes: a second-round training is performed on the target model based on the multiple groups of second training samples. The number of execution times of the first-round is less than the number of execution times of the second-round.

The training sample may represent multiple training samples. The first training sample includes the multiple groups of first training samples, and the second training sample includes the multiple groups of second training samples. In a training process, the target model is trained for multiple rounds. A round of training by adopting the multiple groups of first training samples is different from a round of training by adopting the multiple groups of second training samples, that is, in a training process of a same round, the target model cannot be trained by adopting the first training sample and the second training sample at the same time. In a training process of a same round, the target model is trained by only adopting the multiple groups of first training samples or only adopting the multiple groups of second training samples. The number of execution times of first-round of adopting the multiple groups of first training samples is less than the number of execution times of second-round of adopting the multiple groups of second training samples.

Exemplarily, in a case of the i-th round of training, the target model is trained by adopting the multiple groups of first training samples, and in a case of the (i + 1)-th to (i + k)-th rounds of training, the target model is trained by using multiple groups of second training samples. i is 1, and k is 9, that is, the multiple groups of first training samples are adopted to train the model in the first-round, and the multiple groups of second training samples are adopted to train the model in the second to tenth rounds. Typically, k is much greater than 1. Alternatively, the multiple groups of first training samples may be adopted to train the model in the third round and the eighth round, and the multiple groups of second training samples may be adopted to train the model in the first to second-round, the fourth to seventh round and the ninth to tenth round. This is not particularly limited.

In a case where the number of execution times of the first-round is larger than or equal to or less than but close to the number of execution times of the second-round, in a training process, the component classification loss and the style confrontation loss cannot well constrain the character generation model, so that the style type learning ability and the component content learning ability of the character generation model obtained through the training are weakened, and the accuracy of the character generation model is reduced, and a proportion of the training turns of the second training sample needs to be increased in order to give consideration to the style type learning ability and the component content learning ability, so that the proportion of the training turns of the second training sample may be increased as the number of execution times of the first-round is much larger than the number of execution times of the second-round through configuration, and therefore, both the style type learning ability and the component content learning ability are improved, and the accuracy of the character generation model is improved.

The first training sample and the second training sample are adopted to train the character generation model in the target model in different rounds, respectively, the character generation model may be independently trained separately, the mutual interference between the first training sample and the second training sample is reduced, so that the character generation model is constrained by the component classification loss and the style confrontation loss, the style migration accuracy of the character generation model is improved, and meanwhile, the coverage range and representativeness of samples are increased, the generalization ability of the character generation model is improved, and the generalization efficiency of the character generation model is improved. Moreover, the number of execution times of the second-round of training model adopting the second training sample is set to be greater than the number of execution times of the first-round of training model adopting the first training sample, so that the style type learning ability and the component content learning ability may be improved, and thus the style migration accuracy of the character generation model is further improved.

In S407, a parameter of the character generation model is adjusted according to the first character confrontation loss, the second character confrontation loss, the component classification loss and the style confrontation loss.

For the first training sample, the character classification model does not calculate the component classification loss and the style confrontation loss. The first training sample and the second training sample may be labeled in a training set in advance, so that the first training sample and the second training sample may be distinguished. The noise style feature vector of the style noise word and the generation style feature vector of the first target domain generation word are not input into the component classification model, so that the component classification model does not generate words for the style noise word and the first target domain, and the component classification loss is calculated. The discrimination model is configured to not calculate the style confrontation loss for the first target domain generation word and the first target domain sample word.

According to the technical scheme of the present disclosure, the noise word set is generated by acquiring the standard word set and adding the noise information, the style noise word is screened from the noise word set according to the component included in the first source domain sample word and the font style of the first target domain sample word so as to form the first training sample, the interference degree of the style noise word may be flexibly controlled, and other non-noise interference factors are reduced based on the standard word formation, so that the style noise word without changing the style type and the character content is formed, the interference of the training sample is increased, however, the learning of the character generation model aiming at the style type and the character content is not influenced, the generalization capability of the character generation model is accurately improved, and thus the accuracy of image style conversion is improved.

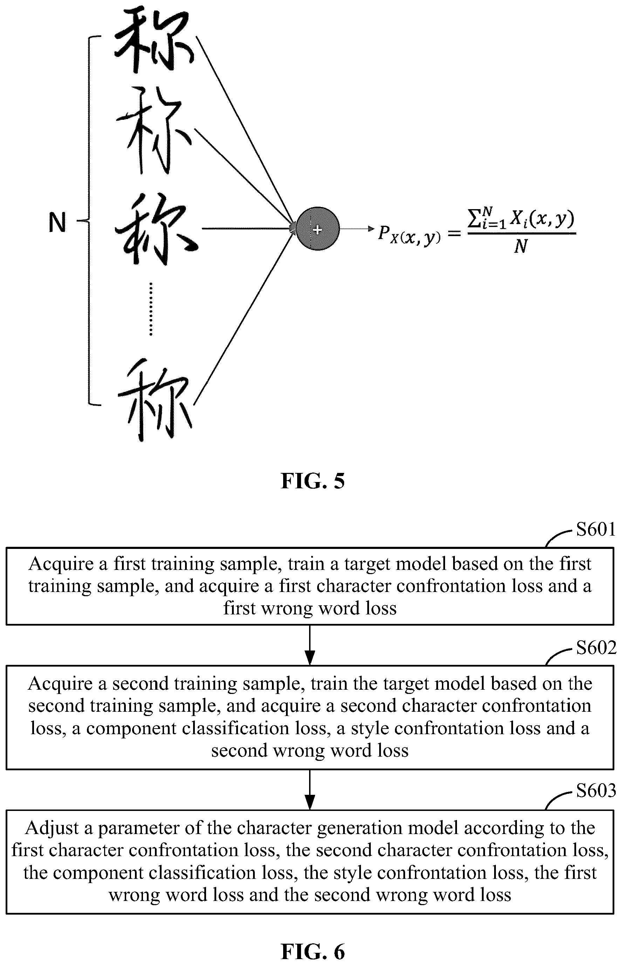

FIG. 5 is a schematic diagram of an embodiment in which a method for calculating an occurrence probability of an effective pixel is provided according to an embodiment of the present disclosure. As shown in FIG. 5, N candidate standard words of different style types and all called "称" words are queried in the standard word set. The number of occurrences of an effective pixel (black pixel) at each pixel position (x, y) of "称" in the N candidate standard words is counted. For example, K times occur, the occurrence probability of the effective pixel corresponding to "称" at the (x, y) position is $P(x,y) = K/N$.

FIG. 6 is a flowchart of another training method for a character generation model according to an embodiment of the present disclosure, which is further optimized and expanded based on the above technical schemes, and may be combined with the above optional implementations. The target model further includes a pre-trained character classification model; the training method for the character generation model may include: the target model is trained based on the first training sample to acquire a first wrong word loss; the target model is trained based on the second training sample to acquire a second wrong word loss; and the parameter of the character generation model is adjusted according to the first wrong word loss and the second wrong word loss.

In S601, a first training sample is acquired, a target model is trained based on the first training sample, and a first character confrontation loss and a first wrong word loss are acquired, where the first training sample includes a first source domain sample word, a first target domain sample word and a style noise word, a style type of the style noise word is the same as a style type of the first target domain sample word, the target model includes a character generation model, a component classification model, a discrimination model and a pre-trained character classification model.

The character classification model is used for judging whether the target generation word is a wrong word. The character classification model may be a residual network 18 (ResNet18) structure, where the module of the ResNet18 structure includes 17 convolutional layers and 1 fully connected layer. For example, a training sample is a dataset of 500 fonts and 6763 characters per font, and experimentally, the trained character classification model achieves 97% classification accuracy on the dataset. The wrong word loss is used for constraining the wrong word rate of the target domain generation word output by the character generation model, and may refer to a difference between the word and the correct word.

In S602, a second training sample is acquired, the target model is trained based on the second training sample, and a second character confrontation loss, a component classification loss, a style confrontation loss and a second wrong word loss are acquired, where the second training sample includes a second source domain sample word, a second target domain sample word and a style standard word, a style type of the style standard word is the same as a style type of the target domain sample word.

Both the first training sample and the second training sample may calculate the wrong word loss, the first wrong word loss and the second wrong word loss may be collectively referred to as the wrong word loss, and the first target domain generation word and the second target domain generation word may be collectively referred to as the target domain generation word, the wrong word loss is calculated based on the following procedure.

The target domain generation word is input into the character classification model to obtain a generation character vector $\overline{X}=[x_0, x_1 \cdots x_i \cdots x_n]$ of the target domain generation word, where each element in the vector $\overline{X}$ may represent one character in the training sample and n represents the number of characters in the training sample, for example, the training sample has 6761 words, then n may be equal to 6760. For the first target domain generation word described above, that a standard character vector $\overline{Y}=[y_0, y_1 \cdots y_i \cdots y_n]$ is preset, where each element in $\overline{Y}$ may represent one character in the training sample, then n represents the number of characters in the training sample, for example, the training sample has 6761 words, then n may be equal to 6760.

The standard character vector $\overline{Y}$ represents a vector that should be output by the character classification model when the target domain generation word is input into the character classification model. For example, if the target domain generation word is a "做" word, which is the first of n words in the training sample, then a standard character vector of the "做" word may be represented as $\overline{Y}=[1,0,0 \ldots 0]$, the wrong word loss may be determined according to the cross entropy between the generation character vector $\overline{X}$ of the target domain generation word and the standard character vector $\overline{Y}$. The wrong word loss may be expressed by equation (1) as follows:

$$L_C = -\sum_0^n x_i\, log y_i \ (1)$$

$L_C$ represents the wrong word loss, xi represents an element with a subscript of i in the generation character vector, yi represents an element with a subscript of i in the standard character vector, i is an integer greater than or equal to 0 and less than or equal to n, and n represents the number of elements in the generation character vector and the standard character vector.

Optionally, that the target model is trained based on the first training sample, and the first character confrontation loss is acquired includes: the first source domain sample word and the style noise word are input into the character generation model to obtain a first target domain generation word; and the first target domain generation word and the first target domain sample word are input into the discrimination model to obtain the first character confrontation loss.

The first target domain sample word and the first target domain generation word are input into the discrimination model to calculate the first character confrontation loss.

Optionally, that the target model is trained based on the second training sample, and the second character confrontation loss, the component classification loss and the style confrontation loss are acquired includes: the second source domain sample word and the style standard word are input into the character generation model to obtain a second target domain generation word and a standard style feature vector of the style standard word; the second target domain generation word is input into the character generation model to obtain a generation style feature vector of the second target domain generation word; the generation style feature vector and the standard style feature vector are input into the component classification model to calculate a component classification loss; and the second target domain sample word and the second target domain generation word are input into the discrimination model to calculate the second character confrontation loss and the style confrontation loss.

The style standard word is input into a style encoder so as to obtain a standard style feature vector of the style standard word. The second target domain generation word is input into the style encoder to obtain a generation style feature vector of the second target domain generation word. The generation style feature vector and the standard style feature vector are input into the component classification model to calculate the component classification loss. The second target domain sample word and the second target domain generation word are input into the discrimination model to calculate the style confrontation loss. Based on the above description, the second target domain sample word and the second target domain generation word are input into the discrimination model to calculate the second character confrontation loss.

For the second training sample, the target model is further configured to calculate the component loss and the style confrontation loss. The component classification model is configured to calculate the component loss.

For the component loss, the component classification model is used for detecting whether components which are the same as components included in the second source domain sample word exist in components included in style standard words corresponding to the standard style feature vector or not, that is, the component classification model is used for detecting whether radicals which are the same as radicals of the second source domain sample word exist in the style standard words corresponding to the standard style feature vector or not.

Exemplarily, the standard style feature vector $\overline{A}=[a_0,a_1 \cdots a_i \cdots a_m]$, each element in $\overline{A}$ may represent one component in a component table, the generation style feature vector $\overline{B}=[b_0,b_1 \cdots b_i \cdots b_m]$, each element in $\overline{B}$ may represent one component in the component table, and m represents the number of components in the component table. For example, the component table has 100 components, for the Chinese character, a component is a radical, and the component table has 100 radicals, then m may be equal to 99. For example, the target domain style word is a "佳" word, which may be composed of a component "亻" and a component "圭", located 2nd and 3rd in m words of the component table, respectively, then the standard style feature vector of the "佳" word may be represented as $\overline{A}=[0,1,1,0,0......0]$. As another example, the target domain generation word is a "你" word, which may be composed of a component "亻" and a component "尔", located 2nd and 5th in the m words of the component table, respectively, then the generation style feature vector of the "你" word may be represented as $\overline{B}=[0,1,0,0,1......0]$.

For the target domain style word, that a target standard style feature vector $\overline{A}^*=[a^*_0,a^*1 \cdots a^*_i \cdots a^*_m]$ is preset, and each element in $\overline{A}^*$ may represent one component in the component table. For the target domain generation word, that a target generation style feature vector $B^*=[b^*_0,b^*_1 \cdots b^*_i \cdots b^*_m]$ is preset, and each element in $\overline{B}^*$ may represent one component in the component table. The target standard style feature vector $\overline{A}^*$ represents a vector that the character classification model should output when the target domain style word is input into the character classification model. For example, the target domain style word is a "佳" word, which may be composed of the component "亻" and the component "圭", located 2nd and 3rd in the m words of the component table, respectively, then the target standard style feature vector of the "佳" word may represent $\overline{A}^* =[0,1,1,0,0......0]$. Correspondingly, the target generation style feature vector $\overline{B}^*$ represents a vector that the character classification model should output when the target domain generation word is input into the character classification model. For example, the target generation word is a "你" word, which may be composed of the component "亻" and the component "尔", located 2nd and 5th in the m words of the component table, respectively, then the target generation style feature vector may be represented as $\overline{B}^*=[0,1,0,0,1......0]$.

A first component classification loss may be determined according to a cross entropy between the standard style feature vector $\overline{A}$ of the target domain style word and the target standard style feature vector $\overline{A}^*$ of the target domain style word. The first component classification loss may be expressed by equation (2) as follows:

$$\mathrm{L_{cls1}}=-\sum_0^m \mathrm{a}_i \, log \mathrm{a} *_i \quad (2)$$

$\mathrm{L_{cls1}}$ represents the first component classification loss, ai represents an element with a subscript of i in the standard style feature vector, $a^*_i$ represents an element with a subscript of i in the target standard style feature vector, i is an integer greater than or equal to 0 and less than or equal to m, and m represents the number of elements in the standard style feature vector and the target standard style feature vector.

A second component classification loss may be determined according to a cross entropy between the generation

style feature vector $\bar{B}$ of the target domain generation word and the target generation style feature vector $\bar{B}^*$ of the target domain generation word. The second component classification loss may be expressed by equation (3) as follows:

$$L_{cls2}=-\sum_0^m b_i \, log b*_i \quad (3)$$

$L_{cls2}$ represents the second component classification loss, $b_i$ represents an element with a subscript of i in the generation style feature vector, $b^*_i$ represents an element with a subscript of i in the target generation style feature vector, i is an integer greater than or equal to 0 and less than or equal to m, and m represents the number of elements in the generation style feature vector and the target generation style feature vector.

A component classification loss of the character generation model may be determined according to the first component classification loss and the second component classification loss. The component classification loss of the character generation model may be expressed by equation (4) as follows:

$$L_{cls} = L_{cls1}+L_{cls2}=-\sum_0^m a_i \, log a*_i - \sum_0^m b_i \, log b*_i \quad (4)$$

$L_{cls}$ represents the component classification loss of the character generation model.

According to the embodiments of the present disclosure, the component classification loss may be used for constraining the accuracy of the component included in the target domain generation word output by the character generation model, so that the probability that the character generation model generates generation words composed of erroneous components is reduced.

The discrimination model is configured to detect whether the target domain sample word and the target domain generation word are the real hand-written word, classify character types and classify style types. Exemplarily, the source domain sample word is a real handwritten word image, while the target domain sample word is a model generation word image, which may be referred to as a fake word image. The target domain generation word is a model generated handwritten image, which may be referred to as a fake handwritten word image. During training, the target domain sample word may be labeled as a true Real (e.g., with a value of 1) and the target domain generation word may be labeled as Fake (e.g., with a value of 0). It is detected whether the target domain sample word and the target domain generation word are the real handwritten word or not, and actually it is detected whether the target domain sample word and the target domain generation word are a module generation word or not, and in a case where a result output by the discrimination model through words generated by the character generation model is true, it is indicated that the words generated by the character generation model are very similar to the handwritten words.

The first training sample and the second training sample may each calculate a character confrontation loss, the first character confrontation loss and the second character confrontation loss may be collectively referred to as the character confrontation loss, the first target domain generation word and the second target domain generation word may be collectively referred to as the target domain generation word, the first target domain sample word and the second target domain sample word may be collectively referred to as the target domain sample word, and the character confrontation loss is calculated based on the following procedure:

The target domain sample word is input into the discrimination model to obtain a first character confrontation vector of the target domain sample word, and the target domain generation word is input into the discrimination model to obtain a second character confrontation vector of the target domain generation word.

Exemplarily, the first character confrontation vector $\bar{C}=[c_0,c_1\cdots\cdots c_i\cdots\cdots c_j]$, each element in $\bar{C}$ may represent one character in the character table, the second character confrontation vector $\bar{D}=[d_0,d_1\cdots\cdots di\cdots\cdots d_j]$, each element in $\bar{D}$ may represent one character in the character table, and j represents the number of characters in the character table. For example, the character table has 6000 characters, and for the Chinese character, the character table includes 6000 Chinese characters, then j may be equal to 5999. Moreover, the element being 1 indicates that a corresponding word is a real handwritten word, and the element being -1 indicates that a corresponding word is a model generation word. For example, the target domain sample word is the "你" word, the "你" word is located 1st in the character table, and the target domain sample word is the real handwritten word with a value of 1 for the 1st element, then the first character confrontation vector of the "你" word is represented as $\bar{C}= [1,0,0,0,0......0]$. As another example, if the target domain generation word is a "佳" word, the "佳" word is located 2nd in the character table, and the target domain generation word is the model generation word with a value of -1 for the 2nd element, then the second character confrontation vector of the "佳" word may be represented as $\bar{D}=[0,-1,0,0,0......0]$,

For the target domain sample word, that a target first character confrontation vector $\overline{C}^* = [c^*_0, c^*_1 \bullet\bullet\bullet\bullet\bullet\bullet c^*_i \bullet\bullet\bullet\bullet\bullet\bullet c^*_j]$ is preset, and each element in $\overline{C}^*$ may represent one character in the character table. For the target domain generation word, that a target second character confrontation vector $\overline{D}^* = [d^*_0, d^*_1 \mathbf{......} d^*i \bullet\bullet\bullet\bullet\bullet\bullet d^*_j]$ is preset, and each element in $\overline{D}^*$ may represent one character in the character table. The target first character confrontation vector $\overline{C}^*$ represents a vector that the discrimination model should output when the target domain sample word is input into the discrimination model. For example, if the target domain sample word is a " 你 " word, the " 你 " word is located 1st in the character table, and the target domain sample word is the real handwritten word with a value of 1 for the 1st element, then the first character confrontation vector of the " 你 " word is represented as $\overline{C}^* = [1,0,0,0,0......0]$. Correspondingly, the target second character confrontation vector $\overline{D}^*$ represents a vector that the discriminating model should output when the target domain generation word is input into the discriminating model. For example, if the target generation word is the " 佳 " word, the " 佳 " word is located 2nd in the character table, and the target domain generation word is the model generation word with a value of -1 for the 2nd element, then the second character confrontation vector of the " 佳 " word may be represented as $\overline{D}^* = [0,-1,0,0,0......0]$.

A first character confrontation loss may be determined according to a cross entropy between the first character confrontation vector $\overline{C}$ of the target domain sample word and the target first character confrontation vector $\overline{C}^*$ of the target domain sample word. The first character confrontation loss may be expressed by equation (5) as follows:

$$\mathrm{L}^{data}_{gen1} = -\sum_0^j c_i \, log c *_i \qquad (5)$$

$\mathrm{L}^{data}_{gen1}$ represents the first character confrontation loss, $c_i$ represents an element with a subscript of i in the first character confrontation vector, $c^*_i$ represents an element with a subscript of i in the target first character confrontation vector, i is an integer greater than or equal to 0 and less than or equal to j, and j represents the number of elements in the first character confrontation vector and the target first character confrontation vector.

A second character confrontation loss may be determined according to a cross entropy between the second character confrontation vector $\overline{D}$ of the target domain generation word and the target first character confrontation vector $\overline{D}^*$ of the target domain generation word. The second character confrontation loss may be expressed by equation (6) as follows:

$$\mathrm{L}^{data}_{gen2} = -\sum_0^j d_i \, log d *_i \qquad (6)$$

$\mathrm{L}^{data}_{gen2}$ represents the second character confrontation loss, $d_i$ represents an element with a subscript of i in the second character confrontation vector, $d^*_i$ represents an element with a subscript of i in the target second character confrontation vector, i is an integer greater than or equal to 0 and less than or equal to j, and j represents the number of elements in the second character confrontation vector and the target second character confrontation vector.

A character confrontation loss of the character generation model may be determined according to the first character confrontation loss and the second character confrontation loss. The character confrontation loss of the character generation model may be expressed by equation (7) as follows:

$$\mathrm{L}^{data}_{gen} = \mathrm{L}^{data}_{gen1} + \mathrm{L}^{data}_{gen2} = -\sum_0^j c_i \, log c *_i - \sum_0^j d_i \, log d *_i \qquad (7)$$

$\mathrm{L}^{data}_{gen}$ represents the character confrontation loss of the character generation model.

For the style confrontation loss, the discrimination model is configured to detect whether the second target domain sample word and the second target domain generation word are the real handwritten word or not and classify style types. The second target domain sample word is input into the discrimination model to obtain a first style confrontation vector of the second target domain sample word, and the second target domain generation word is input into the discrimination model to obtain a second style confrontation vector of the second target domain generation word.

Exemplarily, the first style confrontation vector $\overline{E}$=[$e_0,e_1\cdots e_i\cdots e_k$], each element in $\overline{E}$ may represent one style type in a style table, the second style confrontation vector $\overline{F}$=[$f_0,f_1\cdots f_i\cdots f_k$], each element in $\overline{F}$ may represent one style type in the style table, and k represents the number of style types in the style table. For example, the style table has 1000 style types, for the handwritten word, the style table includes 1000 handwritten fonts, then k may be equal to 999. Moreover, the element being 1 indicates that a corresponding word is a real handwritten word, and the element being -1 indicates that a corresponding word is a model generation word. For example, the target domain sample word is the "你" word, a style type of the "你" word is 998th in the style table, and the target domain sample word is the real handwritten word with a value of 1 for the 998th element, then the first style confrontation vector of the "you" word is represented as $\overline{E}$= [0,0,0......1,0]. As another example, the target domain generation word is a "佳" word, a style type of the "佳" word is 999th in the style table, and the target domain generation word is the model generation word with a value of -1 for the 999th element, then the second style confrontation vector of the "佳" word may be represented as $\overline{F}$=[0,0,0......0,-1].

For the target domain sample word, that a target first style countermeasure vector $\overline{E}^*$=[$e^*_0, e^*_1\cdots e^*_i\cdots e^*_k$] is preset, and each element in $\overline{E}^*$ may represent one style type in the style table. For the target domain generation word, that a target second style confrontation vector $\overline{F}^*$=[$f^*_0, f^*_1\cdots f^*_i\cdots f^*_k$] is preset, and each element in $\overline{F}$ may represent one style type in the style table. The target first style confrontation vector $\overline{E}^*$ represents a vector that the discrimination model should output when the target domain sample word is input into the discrimination model. For example, the target domain sample word is a "你" word, the style type of the "你" word is 998th in the style table, and the target domain sample word is the real handwritten word with a value of 1 for the 998th element, then the first style confrontation vector of the "你" word is represented as $\overline{E}^*$ =[0,0,0......1,0]. Correspondingly, the target second style confrontation vector $\overline{F}^*$ represents a vector that the discrimination model should output when the target domain generation word is input into the discrimination model. For example, the target generation word is the "佳" word, the style type of the "佳" word is located at 999th in the style table, and the target domain generation word is the model generation word with a value of -1 for the 999th element, then the second style confrontation vector of the "佳" word may be represented as $\overline{F}^*$=[0,0,0 ...... 0,-1].

A first style confrontation loss may be determined according to a cross entropy between the first style confrontation vector E of the target domain sample word and the target first style confrontation vector $\overline{E}^*$ of the target domain sample word. The first style confrontation loss may be expressed by equation (8) as follows:

$$L^{style}_{gen1} = -\sum_0^k e_i \log e^*_i \quad (8)$$

$L^{style}_{gen1}$ represents the first style confrontation loss, ei represents an element with a subscript of i in the first style confrontation vector, $e^*_i$ represents an element with a subscript of i in the target first style confrontation vector, i is an integer greater than or equal to 0 and less than or equal to k, and k represents the number of elements in the first style confrontation vector and the target first style confrontation vector.

A second style confrontation loss may be determined according to a cross entropy between the first style confrontation vector D of the target domain generation word and the target second style confrontation vector $\overline{D}^*$ of the target domain generation word. The second style confrontation loss may be expressed by equation (9) as follows:

$$L^{style}_{gen2} = -\sum_0^k f_i \log f^*_i \quad (9)$$

$L^{style}_{gen2}$ represents the second style confrontation loss, $f_l$ represents an element with a subscript of i in the second style confrontation vector, $f^*_i$ represents an element with a subscript of i in the target second style confrontation vector, i is an integer greater than or equal to 0 and less than or equal to k, and k represents the number of elements in the second style confrontation vector and the target second style confrontation vector.

A style confrontation loss of the character generation model may be determined according to the first style confrontation loss and the second style confrontation loss. The style confrontation loss of the character generation model may be expressed by equation (10) as follows:

$$L_{gen}^{style} = L_{gen1}^{style} + L_{gen2}^{style} = -\sum_0^k e_i \log e *_i - \sum_0^k f_i \log f *_i \quad (10)$$

$L_{gen}^{style}$ represents the style confrontation loss of the character generation model.

The component classification loss is introduced by using the component classification model, so that the learning range of a font style is increased, and the migration accuracy of the font style is improved; the character confrontation loss and the style confrontation loss are introduced by using the discrimination model, so that the ability of the character generation model to learn correct fonts and the ability of the character generation model to learn the font style may be improved; the wrong word loss is introduced by using the character classification model, so that the probability of the generation of the wrong word of the character generation model is reduced.

The second training sample is input into the target model to obtain the second target domain generation word, the second target domain generation word is input into the character classification model so as to calculate and obtain the second wrong word loss. Correspondingly, the first training sample is input into the target model to obtain the first target domain generation word, the first target domain generation word is input into the character classification model so as to calculate and obtain the first wrong word loss.

The discrimination model is also used for detecting whether the target domain generation word is a target domain sample word expected to be generated or not. The target domain sample word and the target domain generation word are input into the discrimination model to obtain a cycle-consistency loss.

In order to ensure that the target domain generation word obtained by inputting the source domain sample word into the character generation model is only style conversion and the content is kept unchanged, a cycle-consistency loss may be added for the character generation model. The loss may be calculated from a difference between the target domain sample word and the target domain generation word. For example, a pixel value of each corresponding pixel point of the two images of the target domain sample word and the target domain generation word is subtracted, the absolute value is solved, the difference of each pixel point is obtained, the differences of all pixel points are summed to obtain the cycle-consistency loss of the character generation model, and the cycle-consistency loss may be recorded as $L1_{A2B}$.

Optionally, the training method for the character generation model further includes: the target domain sample word and the target domain generation word are input into the discrimination model to calculate the cycle-consistency loss; and the parameter of the character generation model is adjusted according to the cycle-consistency loss.

In S603, a parameter of the character generation model is adjusted according to the first character confrontation loss, the second character confrontation loss, the component classification loss, the style confrontation loss, the first wrong word loss and the second wrong word loss.

According to the technical scheme of the present disclosure, the configuration of the target model includes the pre-trained character classification model, and the wrong word loss is calculated through the character classification model to constrain the wrong word rate of the target domain generation word output by the character generation model, so that the probability of the generation of the wrong word of the character generation model is reduced.

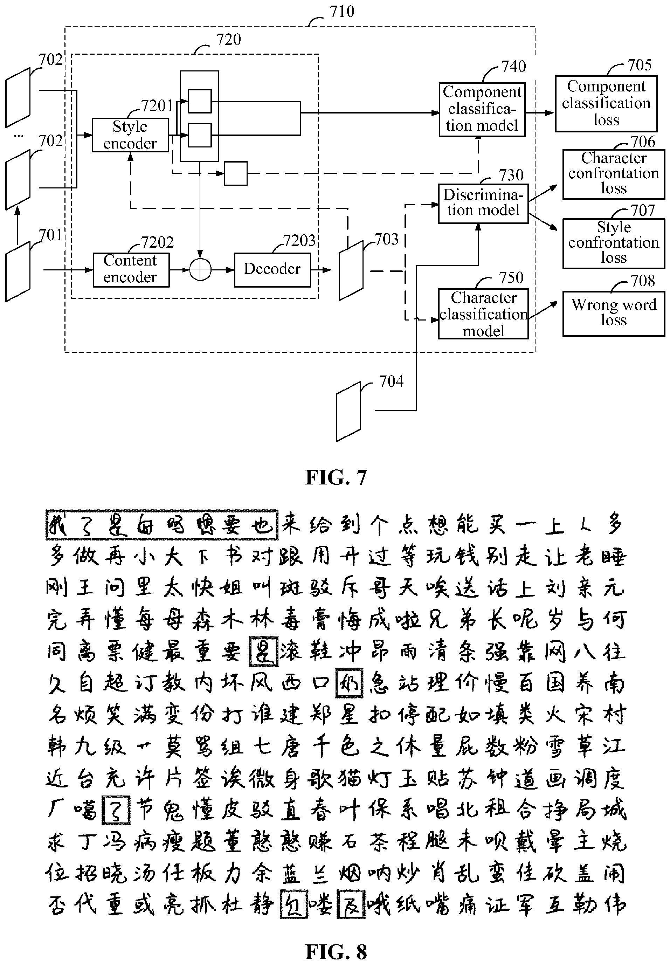

FIG. 7 is a training scene diagram of a character generation model being constrained by using a wrong word loss according to an embodiment of the present disclosure. As shown in FIG. 7, the second training sample is input into a target model 710 to obtain a second target domain generation word 703, the second target domain generation word 703 is input into a character classification model 750 so as to calculate and obtain a second wrong word loss 708. Correspondingly, the first training sample is input into the target model 710 to obtain a first target domain generation word, the first target domain generation word is input into the character classification model 750 so as to calculate and obtain a first wrong word loss.

FIG. 8 is an effect diagram of a generation word of a character generation model completed by the training method according to an embodiment of the present disclosure. Words in the frame are real handwritten words, and words which are not located in the frame are generation words of the character generation model. Therefore, a font style of the generation word of the character generation model is basically consistent with a font style of the real handwritten word, for scribbled handwritten words, the character generation model generates the correct words.

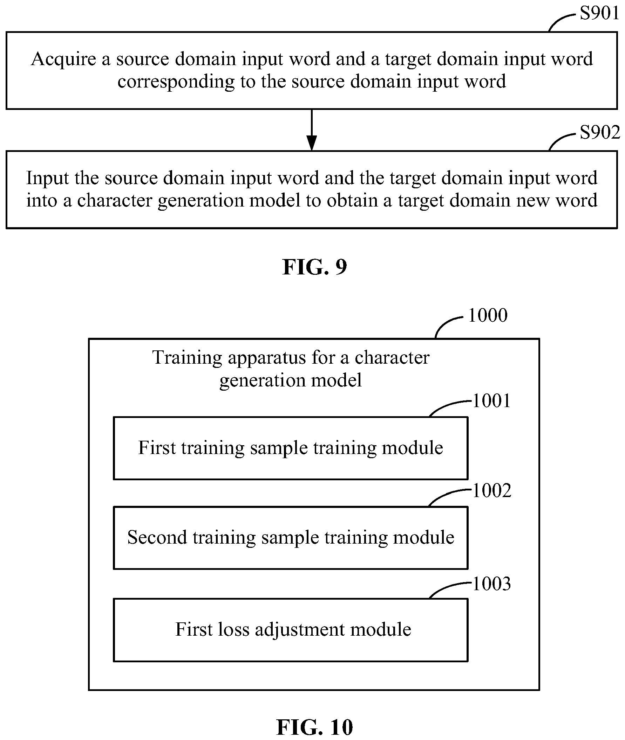

FIG. 9 is a flowchart of a character generation method according to an embodiment of the present disclosure, and this embodiment may be applicable to a case that a source domain style word is converted into a target domain style word according to a training character generation model to generate a new character. The method of this embodiment may be executed by a character generation apparatus, the apparatus is implemented in software and/or hardware and may be configured in an electronic device with certain data calculating capabilities. The electronic device may be a client device or a server device, and the client device is such as a mobile phone, a tablet computer, an on-board terminal, a desktop computer.

In S901, a source domain input word and a target domain input word corresponding to the source domain input word are acquired.

The source domain input word may be an image of words that need to be converted to a target domain font style. The target domain input word may be an image formed by the words with the target domain font style. A component splitting is performed on the source domain input word, at least one component that constitutes the source domain input word is determined, and the target domain input word corresponding to the source domain input word is screened from a set of pre-generated target domain input words according to each component. At least one target domain input words is provided.

The image formed by the words with the target domain font style may be acquired in advance and a set of target domain input words are formed. The set is an image formed of pre-acquired words that have the target domain font style and cover the full component. Exemplarily, for Chinese characters, the target domain font style is a user handwritten font style, images of words with the handwritten font style provided by user authorization may be acquired in advance, and the set of target domain input words is generated. For example, 100 words overlaid with all radicals may be pre-configured and the user may be prompted to authorize the provision of the words with the handwritten font style for the 100 words overlaid with the all radicals so as to generate the set of target domain input words.

In S902, the source domain input word and the target domain input word are input into a character generation model to obtain a target domain new word; where the character generation model is obtained by training according to the training method for the character generation model of any one of the embodiments of the present disclosure.

The character generation model is obtained by training according to the training method of the character generation model. The target domain new word may refer to a word with the target domain font style of a content corresponding to the source domain input word. For example, the source domain input word is a regular script word image, and the target domain new word is a handwritten word image, the handwritten word image may be obtained by inputting the regular script word image into the character generation model, that is, the target domain new word.

In a case of obtaining the target domain new word, a font library may be built based on the target domain new word. For example, new words generated by the character generation model are stored and a font library with the handwritten font style is established. The font library may be applied to an input method, and the user can directly acquire words with the handwritten font style by using the input method based on the font library, which can satisfy the diverse needs of the user and improve the user experience.

The source domain input word and the target domain input word corresponding to the source domain input word are acquired and input into the character generation model so as to obtain the target domain new word, so that the source domain input word is accurately converted into the target domain new word, the accuracy of the generation of the target domain new word can be improved, the efficiency of the generation of the target domain new word can be improved, and the labor cost for generating the target domain new word can reduced.

According to an embodiment of the present disclosure, FIG. 10 is a structure diagram of a training apparatus for a character generation model according to an embodiment of the present disclosure, and the embodiment of the present disclosure is applicable to training a character generation model, the character generation model is configured to convert a source domain style word into a target domain style word. The apparatus is implemented in software and/or hardware and may be configured in an electronic device with certain data calculating capabilities.

A training apparatus 1000 for a character generation model as shown in FIG. 10 includes a first training sample training module 1001, a second training sample training module 1002 and a first loss adjustment module 1003.

The first training sample training module 1001 is configured to acquire a first training sample, train a target model based on the first training sample, and acquire a first character confrontation loss, where the first training sample includes a first source domain sample word, a first target domain sample word and a style noise word, a style type of the style noise word is the same as a style type of the first target domain sample word, the target model includes a character generation model, a component classification model and a discrimination model.

The second training sample training module 1002 is configured to acquire a second training sample, train the target model based on the second training sample, and acquire a second character confrontation loss, a component classification loss and a style confrontation loss, where the second training sample includes a second source domain sample word, a second target domain sample word and a style standard word, a style type of the style standard word is the same as a style type of the second target domain sample word.

The first loss adjustment module 1003 is configured to adjust a parameter of the character generation model according to the first character confrontation loss, the second character confrontation loss, the component classification loss and the style confrontation loss.

According to the technical scheme of the present disclosure, the character generation model in the target model is trained based on the first training sample including the style noise word and the second training sample including the style standard word, the noise is added on the basis of the words, a training sample including noise information is determined to train the character generation model, so that the capability of the character generation model for converting the style of the unknown font may be increased, the generalization capability of the model is improved, and moreover, a training sample not including the noise information is combined to train the character generation model, so that the capability of the model for accurately realizing the style conversion can be improved, and thus the accuracy of the style conversion of the model can be improved.

In an embodiment, the first training sample training module 1001 includes a first sample word acquisition unit, a noise word set generation unit, a style noise word acquisition unit and a style noise word acquisition unit. The first sample word acquisition unit is configured to acquire the first source domain sample word and the first target domain sample word. The noise word set generation unit is configured to acquire a standard word set and generate a noise word set according to the standard word set. The style noise word acquisition unit is configured to select the style noise word from the noise word set according to a component included in the first source domain sample word. The style noise word acquisition unit is configured to determine the first training sample according to the style noise word, the first source domain sample word and the first target domain sample word.

In an embodiment, the noise word set generation unit includes an alternative standard word acquisition subunit, an effective pixel distribution determination subunit and a noise word set generation subunit. The alternative standard word acquisition subunit is configured to acquire, in the standard word set, alternative standard words with different styles and types and a same content. The effective pixel distribution determination subunit is configured to determine effective pixel distribution information of the alternative standard words according to the acquired alternative standard words. The noise word set generation subunit is configured to generate alternative noise words of the alternative standard words according to the effective pixel distribution information, and add the alternative noise words into the noise word set.

In an embodiment, the first training sample includes multiple groups of first training samples, the second training sample includes multiple groups of second training samples. The first training sample training module 1001 includes a first-round training unit, the first-round training unit is configured to perform a first-round training on the target model based on the multiple groups of first training samples. The second training sample training module includes a second-round training unit, the second-round training unit is configured to perform a second-round training on the target model based on the multiple groups of second training samples, where the number of execution times of the first-round is less than the number of execution times of the second-round.

In an embodiment, the first training sample training module 1001 includes a first target domain generation word acquisition unit and a first character confrontation loss acquisition unit. The first target domain generation word acquisition unit is configured to input the first source domain sample word and the style noise word into the character generation model to obtain a first target domain generation word. The first character confrontation loss acquisition unit is configured to input the first target domain generation word and the first target domain sample word into the discrimination model to obtain the first character confrontation loss.

In an embodiment, the second training sample training module 1002 includes a standard style feature vector acquisition unit, a generation style feature vector acquisition unit, a component classification loss calculation unit and a second character confrontation loss calculation unit. The standard style feature vector acquisition unit is configured to input the second source domain sample word and the style standard word into the character generation model to obtain a second target domain generation word and a standard style feature vector of the style standard word. The generation style feature vector acquisition unit is configured to input the second target domain generation word into the character generation model to obtain a generation style feature vector of the second target domain generation word. The component classification loss calculation unit is configured to input the generation style feature vector and the standard style feature vector into the component classification model, and calculate a component classification loss. The second character confrontation loss calculation unit is configured to input the second target domain sample word and the second target domain generation word into the discrimination model to calculate the second character confrontation loss and the style confrontation loss.

In an embodiment, the target model further includes a pre-trained character classification model.

The apparatus further includes a first wrong word loss calculation module, a second wrong word loss calculation module and a second loss adjustment module. The first wrong word loss calculation module is configured to train the target model based on the first training sample to acquire a first wrong word loss. The second wrong word loss calculation module is configured to train the target model based on the second training sample to acquire a second wrong word loss. The second loss adjustment module is configured to adjust the parameter of the character generation model according to the first wrong word loss and the second wrong word loss.

The above-described training apparatus for the character generation model may perform the training method for the character generation model provided in any of the embodiments of the present disclosure, and has corresponding functional modules and beneficial effects of performing the training method for the character generation model.

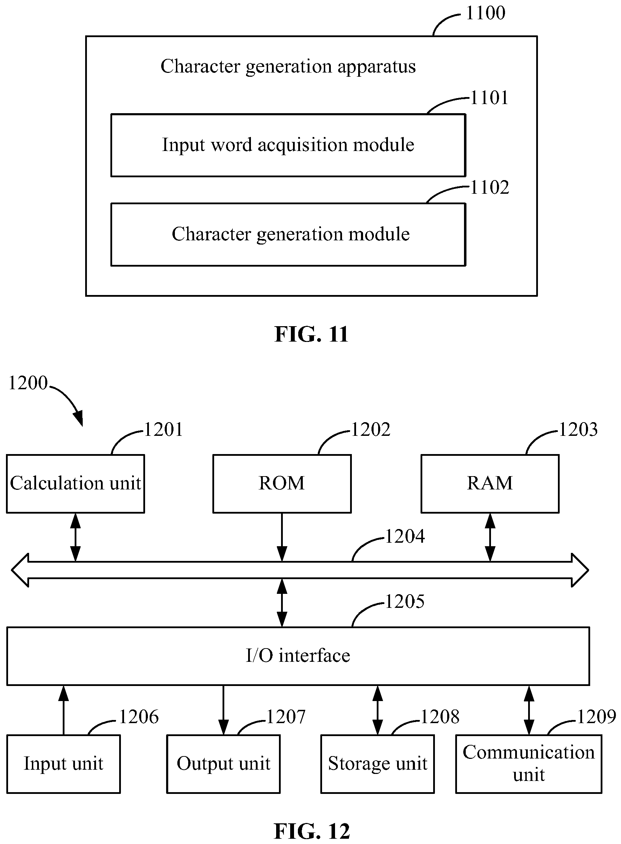

According to an embodiment of the present disclosure, FIG. 11 is a structure diagram of a character generation apparatus according to an embodiment of the present disclosure, and the embodiment of the present disclosure is applicable to a case that a source domain style word is converted into a target domain style word according to a training character generation model to generate a new character. The apparatus is implemented in software and/or hardware and may be configured in an electronic device with certain data calculating capabilities.

The character generation apparatus 1100 as shown in FIG. 11 includes an input word acquisition module 1101 and a character generation module 1102.

The input word acquisition module 1101 is configured to acquire a source domain input word and a target domain input word corresponding to the source domain input word.

The character generation module 1102 is configured to input the source domain input word and the target domain input word into a character generation model to obtain a target domain new word; where the character generation model is obtained by training according to the training method for the character generation model of any one of the embodiments of the present disclosure.

The source domain input word and the target domain input word corresponding to the source domain input word are acquired and input into the character generation model so as to obtain the target domain new word, so that the source domain input word is accurately converted into the target domain new word, the accuracy of the generation of the target domain new word can be improved, the efficiency of the generation of the target domain new word can be improved, and the labor cost for generating the target domain new word can be reduced.

The above-described character generation apparatus may perform the character generation method provided in any of the embodiments of the present disclosure, and has corresponding function modules and beneficial effects of performing the character generation method.

In the technical scheme of the present disclosure, processes of the collection, storage, use, processing, transmission, provision and disclosure and the like of user's personal information involved are all in compliance with the provisions of relevant laws and regulations, and do not violate the public order and good customs.

According to the embodiments of the present disclosure, the present disclosure further provides an electronic device, a readable storage medium and a computer program.

FIG. 12 shows a schematic block diagram of an exemplary electronic device 1200 that may be used for implementing the embodiments of the present disclosure. The electronic device is intended to represent various forms of digital computers, such as laptops, desktops, workstations, personal digital assistants, servers, blade servers, mainframe computers, and other appropriate computers. The electronic device may also represent various forms of mobile devices, such as personal digital processing, cellphones, smartphones, wearable devices, and other similar calculation devices. The components shown herein, their connections and relationships between these components, and the functions of these components, are illustrative only and are not intended to limit implementations of the present disclosure described and/or claimed herein.

As shown in FIG. 12, the device 1200 includes a calculation unit 1201, the calculation unit 1201 may perform various appropriate actions and processes according to a computer program stored in a read-only memory (ROM) 1202 or a computer program loaded from a storage unit 1208 into a random-access memory (RAM) 1203. The RAM 1203 may also store various programs and data required for the operation of the device 1200. The calculation unit 1201, the ROM 1202, and the RAM 1203 are connected via a bus 1204. An input/output (I/O) interface 1205 is also connected to the bus 1204.

Multiple components in the device 1200 are connected to the I/O interface 1205, and the multiple components include an input unit 1206 such as a keyboard or a mouse, an output unit 1207 such as various types of displays or speakers, the storage unit 1208 such as a magnetic disk or an optical disk, and a communication unit 1209 such as a network card, a modem or a wireless communication transceiver. The communication unit 1209 allows the device 1200 to exchange information/data with other devices over a computer network such as the Internet and/or various telecommunication networks.

The calculation unit 1201 may be a variety of general-purpose and/or dedicated processing assemblies having processing and calculating capabilities. Some examples of the calculation unit 1201 include, but are not limited to, a central processing unit (CPU), a graphics processing unit (GPU), a special-purpose artificial intelligence (AI) calculation chip, a calculation unit executing machine learning model algorithms, a digital signal processor (DSP) and any suitable processor, controller and microcontroller. The calculation unit 1201 performs the various methods and processes described above, such as the training method for the character generation model or the character generation method. For example, in some embodiments, the training method for the character generation model or the character generation method may be implemented as computer software programs tangibly embodied in a machine-readable medium, such as the storage unit 1208. In some embodiments, part or all of computer programs may be loaded and/or installed on the device 1200 via the ROM 1202 and/or the communication unit 1209. When the computer program is loaded to the RAM 1203 and executed by the calculation unit 1201, one or more steps of the green wave speed determination method described above may be executed. Alternatively, in other embodiments, the calculation unit 1201 may be configured, in any other suitable manners (e.g., by means of firmware), to perform the green wave speed determination method.

Various implementations of the systems and technologies described above herein may be achieved in digital electronic circuit systems, integrated circuit systems, field-programmable gate arrays (FPGAs), application-specific integrated circuits (ASICs), application-specific standard products (ASSPs), systems on chip (SOCs), complex programmable logic devices (CPLDs), computer hardware, firmware, software, and/or combinations thereof. These various implementations may include implementation in one or more computer programs, and the one or more computer programs are executable and/or interpretable on a programmable system including at least one programmable processor, the programmable processor may be a special-purpose or general-purpose programmable processor for receiving data and instructions from a memory system, at least one input device and at least one output device and transmitting data and instructions to the memory system, the at least one input device and the at least one output device.

Program codes for implementing the methods of the present disclosure may be written in any combination of one or more programming languages. These program codes may be provided for the processor or controller of a general-purpose computer, a special-purpose computer, or another programmable data processing device to enable the functions/operations specified in a flowchart and/or a block diagram to be implemented when the program codes are executed by the processor or controller. The program codes may be executed entirely on a machine, partly on the machine, as a stand-alone software package, partly on the machine and partly on a remote machine, or entirely on the remote machine or server.

In the context of the present disclosure, a machine-readable medium may be a tangible medium that may contain or store a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any appropriate combination of the foregoing. More specific examples of the machine-readable storage medium may include an electrical connection based on one or more wires, a portable computer diskette, a hard disk, a random access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination of the foregoing.

To provide the interaction with a user, the systems and technologies described here may be implemented on a computer. The computer has a display device (e.g., a cathode-ray tube (CRT) or liquid-crystal display (LCD) monitor) for displaying information to the user; and a keyboard and a pointing device (e.g., a mouse or a trackball) through which the user may provide input into the computer. Other kinds of devices may also be used for providing for interaction with the user; for example, feedback provided to the user may be sensory feedback in any form (such as, visual feedback, auditory feedback, or haptic feedback); and input from the user may be received in any form (including acoustic input, speech input, or haptic input).

The systems and technologies described here may be implemented in a calculation system including a back-end component (e.g., a data server), or a calculation system including a middleware component (such as, an application server), or a calculation system including a front-end component (e.g., a client computer having a graphical user interface or a web browser through which the user may interact with the implementations of the systems and technologies described herein), or a calculation system including any combination of such back-end component, middleware component, or front-end component. The components of the system may be interconnected by any form or medium of digital data communication (for example, a communication network). Examples of the communication network include a local area network (LAN), a wide area network (WAN), and the Internet.

The computer system may include clients and servers. A client and a server are generally remote from each other and typically interact through the communication network. A relationship between the clients and the servers arises by virtue of computer programs running on respective computers and having a client-server relationship to each other. The server may be a cloud server, and may also be a server of a distributed system, or a server combining a blockchain.

It should be understood that various forms of the flows shown above, reordering, adding or deleting steps may be used. For example, the steps described in the present disclosure may be executed in parallel, sequentially or in different orders as long as the desired result of the technical scheme provided in the present disclosure may be achieved. The execution sequence of these steps is not limited herein.

The above implementations should not be construed as limiting the protection scope of the present disclosure. It should be understood by those skilled in the art that various modifications, combinations, sub-combinations and substitutions may be made, depending on design requirements and other factors. Any modification, equivalent replacement, and improvement made within the spirit and principle of the present disclosure should be included within the protection scope of the present disclosure.

**Claims**

1. A training method for a character generation model, comprising:

   acquiring (S101) a first training sample, training a target model based on the first training sample, and acquiring a first character confrontation loss, wherein the first training sample comprises a first source domain sample word, a first target domain sample word and a style noise word, a style type of the style noise word is the same as a style type of the first target domain sample word, the target model comprises a character generation model, a component classification model and a discrimination model;

   acquiring (S102, S406) a second training sample, training the target model based on the second training sample, and acquiring a second character confrontation loss, a component classification loss and a style confrontation loss, wherein the second training sample includes a second source domain sample word, a second target domain sample word and a style standard word, a style type of the style standard word is the same as a style type of the target domain sample word; and

   adjusting (S103) a parameter of the character generation model according to the first character confrontation loss, the second character confrontation loss, the component classification loss and the style confrontation loss.

2. The method of claim 1, wherein acquiring (S101) the first training sample comprises:

   acquiring (S401) the first source domain sample word and the first target domain sample word;
   acquiring (S402) a standard word set, and generating a noise word set according to the standard word set;
   selecting (S403) the style noise word from the noise word set according to a component comprised in the first source domain sample word; and
   generating (S404) the first training sample according to the style noise word, the first source domain sample word and the first target domain sample word.

3. The method of claim 2, wherein generating the noise word set according to the standard word set comprises:

   acquiring, in the standard word set, alternative standard words with different styles and types and a same content;
   determining effective pixel distribution information of the alternative standard words according to the acquired alternative standard words; and
   generating alternative noise words of the alternative standard words according to the effective pixel distribution information, and adding the alternative noise words into the noise word set.

4. The method of claim 3, wherein determining the effective pixel distribution information of the alternative standard words according to the acquired alternative standard words comprises:

   counting a number of the acquired alternative standard words;
   calculating effective times of effective pixels appearing at pixel positions in the acquired alternative standard words;
   calculating an occurrence probability of the effective pixels at the pixel positions according to the effective times and the number of the words; and
   determining the occurrence probability of the effective pixels at different pixel positions in the acquired alternative standard words as the effective pixel distribution information of the alternative standard words.

5. The method of claim 1, wherein the first training sample comprises a plurality of groups of first training samples, the second training sample comprises a plurality of groups of second training samples, and training the target model based on the first training sample comprises:

   performing a first-round training on the target model based on the plurality of groups of first training samples;
   wherein training the target model based on the second training sample comprises:
   performing a second-round training on the target model based on the plurality of groups of second training samples, wherein a number of execution times of the first-round is less than a number of execution times of the second-round.

6. The method of claim 1, wherein training (S101) the target model based on the first training sample, and acquiring the first character confrontation loss comprises:

inputting the first source domain sample word and the style noise word into the character generation model to obtain a first target domain generation word; and

inputting the first target domain generation word and the first target domain sample word into the discrimination model to obtain the first character confrontation loss.

7. The method of claim 1, wherein training (S102) the target model based on the second training sample, and acquiring the second character confrontation loss, the component classification loss and the style confrontation loss comprises:

inputting the second source domain sample word and the style standard word into the character generation model to obtain a second target domain generation word and a standard style feature vector of the style standard word;

inputting the second target domain generation word into the character generation model to obtain a generation style feature vector of the second target domain generation word;

inputting the generation style feature vector and the standard style feature vector into the component classification model to calculate a component classification loss; and

inputting the second target domain sample word and the second target domain generation word into the discrimination model to calculate the second character confrontation loss and the style confrontation loss.

8. The method of claim 1, wherein the target model further comprises a pre-trained character classification model; the method further comprises:

training the target model based on the first training sample to acquire a first wrong word loss;

training the target model based on the second training sample to acquire a second wrong word loss; and

adjusting the parameter of the character generation model according to the first wrong word loss and the second wrong word loss.

9. A character generation method, comprising:

acquiring (S901) a source domain input word and a target domain input word corresponding to the source domain input word; and

inputting (S902) the source domain input word and the target domain input word into a character generation model to obtain a target domain new word; wherein the character generation model is obtained by training according to the training method for the character generation model of any one of claims 1 to 8.

10. A training apparatus (1000) for a character generation model, comprising:

a first training sample training module (1001), which is configured to acquire a first training sample, train a target model based on the first training sample, and acquire a first character confrontation loss, wherein the first training sample comprises a first source domain sample word, a first target domain sample word and a style noise word, a style type of the style noise word is the same as a style type of the first target domain sample word, the target model comprises a character generation model, a component classification model and a discrimination model;

a second training sample training module (1002), which is configured to acquire a second training sample, train the target model based on the second training sample, and acquire a second character confrontation loss, a component classification loss and a style confrontation loss, wherein the second training sample includes a second source domain sample word, a second target domain sample word and a style standard word, a style type of the style standard word is the same as a style type of the target domain sample word; and

a first loss adjustment module (1003), which is configured to adjust a parameter of the character generation model according to the first character confrontation loss, the second character confrontation loss, the component classification loss and the style confrontation loss.

11. The apparatus of claim 10, wherein the first training sample training module (1001) comprises:

a first sample word acquisition unit, which is configured to acquire the first source domain sample word and the first target domain sample word;

a noise word set generation unit, which is configured to acquire a standard word set and generate a noise word set according to the standard word set;

a style noise word acquisition unit, which is configured to select the style noise word from the noise word set according to a component comprised in the first source domain sample word; and

a first training sample generation unit, which is configured to generate the first training sample according to the style noise word, the first source domain sample word and the first target domain sample word.

12. A character generation apparatus (1100), comprising:

an input word acquisition module (1101), which is configured to acquire a source domain input word and a target domain input word corresponding to the source domain input word;

a character generation module (1102), which is configured to input the source domain input word and the target domain input word into a character generation model to obtain a target domain new word; wherein the character generation model is obtained by training according to the training apparatus for the character generation model of any one of claims 10 and 11.

13. An electronic device, comprising:

at least one processor; and
a memory communicatively connected to the at least one processor;

wherein the memory stores an instruction executable by the at least one processor, and the instruction, when executed by the at least one processor, causes the at least one processor to perform the training method for the character generation model of any one of claims 1 to 8 or the character generation method of claim 9.

14. A non-transitory computer readable storage medium storing a computer instruction, wherein the computer instruction is configured to cause a computer to perform the training method for the character generation model of any one of claims 1 to 8 or the character generation method of claim 9.

15. A computer program, comprising a computer program, wherein the computer program, when executed by a processor, implements the training method for the character generation model of any one of claims 1 to 8 or the character generation method of claim 9.

S101

Acquire a first training sample, train a target model based on the first training sample, and acquire a first character confrontation loss

S102

Acquire a second training sample, train the target model based on the second training sample, and acquire a second character confrontation loss, a component classification loss and a style confrontation loss

S103

Adjust a parameter of the character generation model according to the first character confrontation loss, the second character confrontation loss, the component classification loss and the style confrontation loss

**FIG. 1**

**FIG. 2**

EP 4 148 678 A1

**FIG. 3**

25

S401

Acquire a first source domain sample word and a first target domain sample word

↓ S402

Acquire a standard word set, and generate a noise word set according to the standard word set

↓ S403

Select the style noise word from the noise word set according to the component included in the first source domain sample word

↓ S404

Generate the first training sample according to the style noise word, the first source domain sample word and the first target domain sample word

↓ S405

Train a target model based on the first training sample, and acquire a first character confrontation loss

↓ S406

Acquire a second training sample, train the target model based on the second training sample, and acquire a second character confrontation loss, a component classification loss and a style confrontation loss

↓ S407

Adjust a parameter of the character generation model according to the first character confrontation loss, the second character confrontation loss, the component classification loss and the style confrontation loss

**FIG. 4**

$$P_{X(x,y)} = \frac{\sum_{i=1}^{N} X_i(x,y)}{N}$$

**FIG. 5**

| |
|---|
| Acquire a first training sample, train a target model based on the first training sample, and acquire a first character confrontation loss and a first wrong word loss |

S601

| |
|---|
| Acquire a second training sample, train the target model based on the second training sample, and acquire a second character confrontation loss, a component classification loss, a style confrontation loss and a second wrong word loss |

S602

| |
|---|
| Adjust a parameter of the character generation model according to the first character confrontation loss, the second character confrontation loss, the component classification loss, the style confrontation loss, the first wrong word loss and the second wrong word loss |

S603

**FIG. 6**

**FIG. 7**

**FIG. 8**

S901

Acquire a source domain input word and a target domain input word corresponding to the source domain input word

S902

Input the source domain input word and the target domain input word into a character generation model to obtain a target domain new word

**FIG. 9**

1000

Training apparatus for a character generation model

1001

First training sample training module

1002

Second training sample training module

1003

First loss adjustment module

**FIG. 10**

1100

Character generation apparatus

1101

Input word acquisition module

1102

Character generation module

**FIG. 11**

1200

1201

Calculation unit

1202

ROM

1203

RAM

1204

1205

I/O interface

1206

Input unit

1207

Output unit

1208

Storage unit

1209

Communication unit

**FIG. 12**

Europäisches
Patentamt

European
Patent Office

Office européen
des brevets

# EUROPEAN SEARCH REPORT

Application Number

EP 22 15 8686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 140 017 A (BEIJING BAIDU NETCOM SCI & TECH CO LTD) 20 July 2021 (2021-07-20) | 9,12-15 | INV. G06T11/00 G06K9/00 G06T11/60 |
| A | * abstract *<br>* paragraphs [0011], [0033], [0040], [0043], [0044], [0047], [0048], [0051] – [0054], [0064], [0076] * | 1-8,10, 11 | |
| A | US 2021/150357 A1 (KARRAS TERO TAPANI [FI] ET AL) 20 May 2021 (2021-05-20)<br>* abstract *<br>* figures 6B,6C *<br>* paragraph [0180] * | 1-15 | |

TECHNICAL FIELDS
SEARCHED (IPC)

G06T
G06K
G06V

The present search report has been drawn up for all claims

| Place of search | Date of completion of the search | Examiner |
|---|---|---|
| Munich | 27 July 2022 | Scholz, Volker |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................

& : member of the same patent family, corresponding document

## ANNEX TO THE EUROPEAN SEARCH REPORT
## ON EUROPEAN PATENT APPLICATION NO.

EP 22 15 8686

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2022

| Patent document cited in search report | | Publication date | Patent family member(s) | | Publication date |
|---|---|---|---|---|---|
| CN 113140017 | A | 20-07-2021 | CN | 113140017 A | 20-07-2021 |
| | | | EP | 4044132 A1 | 17-08-2022 |
| | | | JP | 2022058691 A | 12-04-2022 |
| | | | KR | 20220034081 A | 17-03-2022 |
| | | | US | 2022188637 A1 | 16-06-2022 |
| US 2021150357 | A1 | 20-05-2021 | NONE | | |

For more details about this annex : see Official Journal of the European Patent Office, No. 12/82

EPO FORM P0459